# EUROPEAN PATENT SPECIFICATION

(11) **EP 3 327 963 B1**
(45) Date of publication and mention of the grant of the patent: **27.02.2019**
(21) Application number: 16306576.6
(22) Date of filing: 29.11.2016
(51) Int. Cl.: H04J 14/02

(54) **OPTICAL MULTIPLEXING DEVICE AND ASSOCIATED EQUIPMENT AND METHOD**
OPTISCHE MULTIPLEXER-VORRICHTUNG UND ZUGEHÖRIGE AUSRÜSTUNG UND VERFAHREN
DISPOSITIF DE MULTIPLEXAGE OPTIQUE ET PROCÉDÉ ET ÉQUIPEMENT ASSOCIÉS

(43) Date of publication of application: 30.05.2018
(73) Proprietor: Alcatel Lucent, 91620 Nozay (FR)
(72) Inventor: ZAMI, Thierry, 91620 Nozay (FR); FARACI, Victor, 91620 Nozay (FR); RAINSANT, Jean-Marc, 91620 Nozay (FR)
(74) Representative: Nokia EPO representatives

(56) References cited:
- US-A1- 2012 087 658
- US-B2- 8 873 972

## Description

### BACKGROUND OF THE INVENTION

The present invention refers to a multiplexing device of an optical transmission network and in particular to a multiplexing device configured to be coupled to a long haul transmission line. Such long haul transmission lines refer notably to submarine transmissions.

In such submarine transmissions, operating stability of the equipment is very important to optimize the transmission performance whatever the network state, for instance even in case of a cable failure in some upstream part of the submarine optical network. This is done by adding in each emitting terminal further dummy wavelength division multiplexing (WDM) signals to ensure that the series of amplifiers along the submarine transmission line run in full loading mode for any effective traffic load through this line.

Whereas these extra signals initially consisted of continuous wavelengths several years ago, they are now replaced by amplified spontaneous emission signals in the more recent transmission systems featuring WDM channels modulated with polarization division multiplexing-X quadrature amplification modulation (PDM-xQAM) format and so enabling higher data rate per channel. Unlike the continuous wavelengths, amplified spontaneous emission channels do not induce harmful non-linear effects on their adjacent channel really carrying data with this new generation PDM-xQAM modulation.

But, the introduction of such amplified spontaneous emission within a multiplexed signal induces some technical problems.

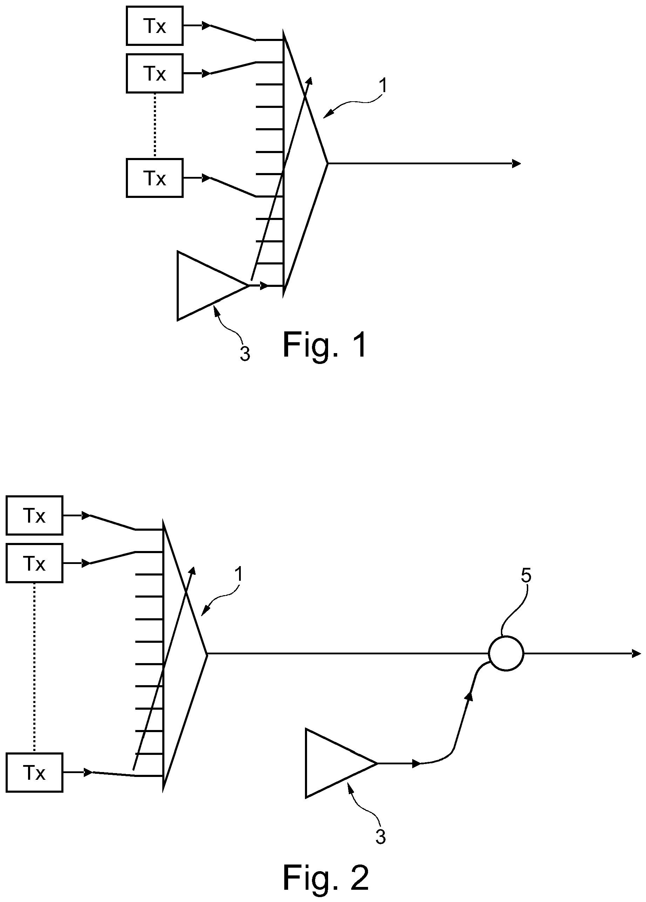

Figure 1 represents an obvious solution to produce a multiplexed signal with idle wavelength channels filled with amplified spontaneous emission signals. It consists in a wavelength selective switch 1 with a plurality of inputs, most of the inputs being coupled to transmitters Tx and one of the inputs being linked to an amplified spontaneous emission source 3.

However, such solution provides a poor optical signal to noise ratio (lower than 30 dB/0,1 nm) which is not suitable with long haul submarine transmission with high spectral efficiency as it would require additional amplifiers along the transmission line which are very expensive equipment.

An alternate solution is given in figure 2 wherein the amplified spontaneous emission signal is added to the multiplexed signal at the output of the wavelength selective switch 1 via an optical coupler 5.

However, with such a configuration, noise from the amplified spontaneous emission signal appears in the data channels leading to a poor optical signal to noise ratio. A possible solution is the addition of a wavelength blocker between the amplified spontaneous emission source and the optical coupler. However, with such solution, the obtained optical signal to noise ratio is also low as in the case of the solution disclosed in figure 1. Indeed, the optical isolation provided by the wavelength selective switch or by the wavelength blocker is too low to prevent crosstalk impairments between the channels filed with amplified spontaneous emission signals and the adjacent data channels. Other known solutions are either not satisfying in terms of signal to noise ratio or very expensive as they require additional expensive equipment. US2012/08768 discloses a WDM system in which a WSS band aggregator combines one or more spectral portions of broadband noise with the bands of channel wavelengths such that the spectral portions of the broadband noise occupies unutilized channels in the combined aggregate optical signal.

### SUMMARY OF THE INVENTION

It is therefore an object of the invention to provide a solution enabling the use of flexible multiplexing devices within long haul transmission while ensuring reliability of the transmission and without requiring additional expensive equipment.

Thus, the present invention refers to an optical multiplexing device destined to be coupled to an optical transmission line for transmitting a multiplexed signal comprising a plurality of multiplexed wavelength channels within a given waveband, the said optical multiplexing device comprising:
- a first wavelength selective switch "WSS" comprising a plurality of input/output ports,
- a first optical amplifier having an output configured to be coupled to an input/output port of the first wavelength selective switch and configured for emitting amplified spontaneous emission signals on the given waveband,
the first wavelength selective switch being configured for transmitting the amplified spontaneous emission signals on the idle wavelength channels of the multiplexed signal,
wherein the optical multiplexing device also comprises:
- a second wavelength selective switch,
- a second optical amplifier having:
   - an input configured to be coupled to an input/output port of the first wavelength selective switch and
   - an output configured to be coupled to an input/output port of the second wavelength selective switch,
   the first wavelength selective switch being configured for transmitting a spectrally selected part of the spontaneous emission signals received from the first optical amplifier toward the second optical amplifier and the second wavelength selective switch being configured for transmitting the amplified spontaneous emission signals received from the second optical amplifier toward the optical transmission line.

The transmission of amplified spontaneous emission signals through a first WSS, an amplifier and a second WSS enables obtaining a multiplexed signal wherein the idle channels are fed with the amplified spontaneous emission signals with a good optical isolation in the spectral slots where effective data channels are present, so that the optical signal to noise ratio of these data channels is not impacted by the idle channels.

According to another aspect of the present invention, the emission spontaneous signal transmitted from the first wavelength selective switch toward the second optical amplifier corresponds to a filtered part of the emission spontaneous signal received from the first optical amplifier comprising only the wavelength channels corresponding to the idle wavelength channels of the multiplexed signal.

According to a further aspect of the present invention, the second wavelength selective switch is configured for receiving a plurality of data signals and for multiplexing the data signals and the amplified spontaneous emission signals received from the second optical amplifier into a multiplexed signal destined to be transmitted to the optical transmission line.

According to an additional aspect of the present invention, the first wavelength selective switch is configured as a demultiplexer comprising an input/output port configured to be coupled to the transmission line for receiving a multiplexed signal and a plurality of input/output ports configured to be coupled to a respective plurality of receiving units configured for receiving the signals demultiplexed by the first wavelength selective switch and wherein the second wavelength selective switch is configured as a multiplexer comprising a plurality of input/output ports configured to be coupled to a respective plurality of transmitting units configured for emitting data signals and an input/output port configured to be coupled to the transmission line for transmitting a multiplexed signal.

According to another aspect of the present invention, the receiving units comprise coherent receivers.

According to a further aspect of the present invention, the first and the second wavelength selective switches refer to the same wavelength selective switch, the said wavelength selective switch being configured as a multiplexer comprising a plurality of input/output ports configured to be coupled to a respective plurality of transmitting units configured for emitting data signals and an input/output port configured to be coupled to the transmission line for transmitting a multiplexed signal.

According to an additional aspect of the present invention, the first optical amplifier has its output coupled to a first input/output port of the wavelength selective switch and the second optical amplifier has its input coupled to a second input/output port of the wavelength selective switch and its output coupled to a third input/output port of the wavelength selective switch and wherein the wavelength selective switch is configured for transmitting the signal received on the first input/output port toward the second input/output port and for multiplexing the signal received on the third input/output port with the data signals received from the plurality of transmitting units.

According to another aspect of the present invention, the wavelength selective switches are liquid crystal on silicon "LCoS" based wavelength selective switches.

According to a further aspect of the present invention, the optical amplifiers are erbium doped fiber amplifier "EDFA" optical amplifiers.

According to an additional aspect of the present invention, the optical multiplexing device is configured to be coupled to a submarine transmission line.

The present invention also refers to an optical multiplexing equipment comprising:
- a first optical multiplexing device configured for transmitting a first multiplexed signal on a first waveband,
- a second optical multiplexing device configured for transmitting a second multiplexed signal on a second waveband different from the first waveband,
- a first optical coupler comprising an input configured to be coupled to the transmission line to receive a multiplexed signal, a first output configured to be coupled to an input/output port of the first wavelength selective switch of the first optical multiplexing device for transmitting a multiplexed signal and a second output configured to be coupled to an input/output port of the first wavelength selective switch of the second optical multiplexing device for transmitting the multiplexed signal,
- a second optical coupler comprising an output configured to be coupled to the transmission line to transmit a multiplexed signal, a first input configured to be coupled to an input/output port of the second wavelength selective switch of the first optical multiplexing device for receiving the first multiplexed signal and a second input configured to be coupled to an input/output port of the second wavelength selective switch of the second optical multiplexing device for transmitting the second multiplexed signal, the second optical coupler being configured for multiplexing the first and the second multiplexed signals and for transmitting the multiplexed signal comprising the first and the second multiplexed signals toward the transmission line.

According to a further embodiment, the first waveband and the second waveband are at least partially overlapping so that the idle wavelength channels of the first optical multiplexing device correspond to the idle wavelength channels of the second optical multiplexing device.

According to another aspect of the present invention, the optical multiplexing equipment also comprises:
- a first optical circulator comprising:
   - a first input/output port configured to be coupled to an input/output port of the first wavelength selective switch of the first optical multiplexing device,
   - a second input/output port configured to be coupled to the input port of the second optical amplifier of the first optical multiplexing device,
   - a third input/output port configured to be coupled to an input/output port of the second wavelength selective switch of the first optical multiplexing device,
   the first optical circulator being configured for receiving the amplified spontaneous emission signals from the first wavelength selective switch of the first optical multiplexing device on its first input/output port, for transmitting the received amplified spontaneous emission signals to the second optical amplifier of the first optical multiplexing device via its second input/output port, for receiving a test signal sent from at least one transmitting unit of the first optical multiplexing device through the second wavelength selective switch of the first optical multiplexing device on its third input/output port and for transmitting the test signal to the first wavelength selective switch of the first optical multiplexing device via its first input/output port,
- a second optical circulator comprising:
   - a first input/output port configured to be coupled to an input/output port of the first wavelength selective switch of the second optical multiplexing device,
   - a second input/output port configured to be coupled to the input port of the second optical amplifier of the second optical multiplexing device,
   - a third input/output port configured to be coupled to an input/output port of the second wavelength selective switch of the second optical multiplexing device,
   the second optical circulator being configured for receiving the amplified spontaneous emission signals from the first wavelength selective switch of the second optical multiplexing device on its first input/output port, for transmitting the received amplified spontaneous emission signals to the second optical amplifier of the second optical multiplexing device via its second input/output port, for receiving a test signal sent from at least one transmitting unit of the second optical multiplexing device through the second wavelength selective switch of the second optical multiplexing device on its third input/output port and for transmitting the test signal to the first wavelength selective switch of the second optical multiplexing device via its first input/output port.

The present invention also refers to a method for transmitting an optical multiplexed signal comprising a plurality of wavelength division multiplexing channels lying in a given waveband to an optical transmission line wherein the method comprises the following steps:
- emitting an amplified spontaneous emission signal on the given waveband,
- filling idle wavelength division multiplexing channels of the multiplexed signal with the amplified spontaneous emission signal using a wavelength selective switch,
- amplifying the wavelength division multiplexing channels filled with the amplified spontaneous emission signals,
- multiplexing the amplified wavelength division multiplexing channels filled with the amplified spontaneous emission signals and the data channels to form a multiplexed signal using a wavelength selective switch,
- transmitting the multiplexed signal toward a transmission line.

According to another aspect of the present invention, the emission step is achieved at an optical power lower than 5 dBm and wherein the amplification step is achieved at an optical power higher than 0 dBm.

### BRIEF DESCRIPTION OF THE DRAWINGS

FIG.**1** is a diagram of a first configuration of an optical multiplexing device according to the state of the art;
FIG.**2** is a diagram of a second configuration of an optical multiplexing device according to the state of the art;
FIG.**3** is a diagram of a first embodiment of an optical multiplexing device according to the present invention.
FIG.**4** is a diagram of the construction of a WSS;
FIG.**5a** is a plot representing an optical power as a function of frequency at the output of a first amplifier;
FIG.**5b** is a plot representing an optical power as a function of frequency at the output of a first WSS;
FIG.**5c** is a plot representing an optical power as a function of frequency at the output of a second amplifier;
FIG.**5d** is a plot representing an optical power as a function of frequency at the output of a second WSS;
FIG.**6** is a diagram of a second embodiment of an optical multiplexing device according to the present invention;
FIG.**7** is a diagram of a first embodiment of an optical multiplexing equipment according to the present invention;
FIG.**8** is a diagram of a second embodiment of an optical multiplexing equipment according to the present invention;

### DETAILED DESCRIPTION OF THE INVENTION

As used herein, the term "WDM" refers to the acronym Wavelength Division Multiplexing and refers to the multiplexing of a plurality of wavelength channels within a single multiplexed signal enabling therefore to multiply the data rate;
As used herein, the term "WSS" refers to the acronym Wavelength Selective Switch and refers to a device capable of multiplexing/demultiplexing and switching WDM signals between its input(s) and its output(s). The WSS used in the present invention may be liquid crystal on silicon "LCoS" type WSS.
As used herein, the term "idle channel" refers to a channel that is not used for transmitting data signals;
The following embodiments are examples. Although the description refers to one or several embodiments, it does not mean necessarily that the features apply only to a single embodiment. Simple features of the different embodiments may be combined to provide additional embodiments.

In the following description, some elements can be indexed such as a first element and a second element. In such case, it refers to a simple indexing to differentiate and name elements having similar functions. Such indexing does not imply any priority of one element with respect to another or a temporal order.

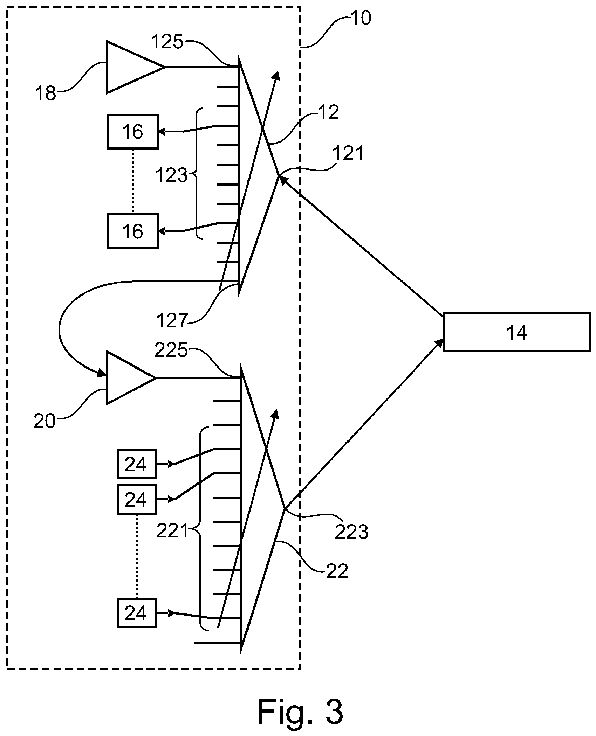

The embodiments of the present invention refer to an optical multiplexing device 10 configured to be linked to a transmission fiber or transmission line and in particular a long-haul transmission fiber or line for example a submarine transmission line. Fig.3 represents a diagram of a first embodiment of the optical multiplexing device 10 linked to a transmission line or transmission fiber 14.

The optical multiplexing device 10 comprises a first wavelength selective switch 12 hereafter called first WSS 12 comprising a plurality of input/output ports and a second wavelength selective switch 22 hereafter called second WSS 22 comprising a plurality of input/output ports. In the present case, the first WSS 12 is configured as a demultiplexer for demultiplexing the multiplexed wavelength channels received from the transmission fiber 14 and the second WSS 22 is configured as a multiplexer for multiplexing the wavelength channels to be transmitted toward to the transmission fiber 14.

The first WSS 12 comprises a main input 121 linked to the transmission fiber 14 and a plurality of main outputs 123 linked to a respective plurality of receiving units 16. The receiving units 16 may comprise one of several receivers, for example coherent receivers and possibly one or several optical couplers. However, non-coherent receivers may also be used and may be coupled with optical filters. The number of receivers in each receiving unit 16 may be chosen according to the required quality of signal, a higher number of receivers implying a lower quality of signal due to the different required optical coupling. The first WSS 12 is configured for demultiplexing the multiplexed WDM signal received from the transmission fiber 14 and for transmitting the different demultiplexed wavelength channels toward one of its outputs 123 in order for the different wavelength channels to be received and processed by the different receiving units 16.

The optical multiplexing device 10 also comprises a first optical amplifier 18 having an output coupled to an input/output port 125 of the first WSS 12 which is different from the main input 121 and different from the main outputs 123. The first optical amplifier 18 is configured for emitting amplified spontaneous emission signals on a waveband corresponding to the waveband of the different wavelength channels used in the transmission fiber 14, for example a waveband corresponding to the C band and lying between 1530 and 1565 nm.

The optical multiplexing device 10 also comprises a second optical amplifier 20 having an input coupled to an input/output port 127 of the first WSS 12 which is different from the main input 121, different from the main outputs 123 and different from the input/output port 125.

The first WSS 12 is configured for transmitting the spontaneous emission signals received from the first optical amplifier 18 on its input/output port 125 toward the second optical amplifier 20 via its input/output port 127.

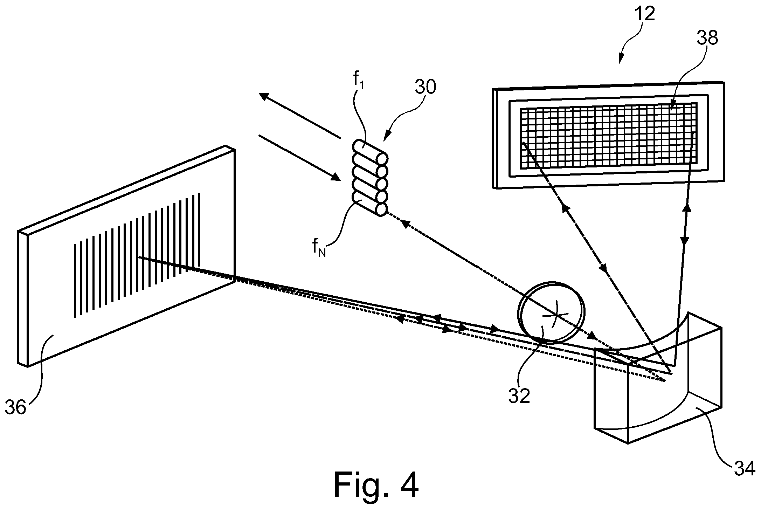

Fig.4 represents an example of a structure of a WSS such as the first WSS 12. It comprises a plurality of fibers f₁..f_{N} coupled respectively to the different input/output ports and arranged as a fiber array 30 having a 1*N dimension. A signal received by a fiber f₁...f_{N} is transmitted through a lens 32 to be focused at the center of a cylindrical mirror 34 where it is reflected toward a grating 36.
The grating 36, for example a Bragg grating, enables separating the signals associated with the different wavelength channels and the separated signals are then transmitted toward the cylindrical mirror 34 and reflected toward an array of beam steering elements 38. The grating 36, the cylindrical mirror 34 and the beam steering elements 38 are configured so that the signals corresponding to the different wavelength channels are directed toward different beam steering elements 38. A beam steering element 38 may correspond to a micro-mirror that can be rotated around one axis and at least one beam steering element 38 is associated with each wavelength channel. In the present case, the rotation axis is horizontal so that the beam steering elements 38 can be rotated to change the vertical angle of reflection (which enables to choose a fiber f₁...f_{N} of the fiber array 30 arranged vertically). Alternatively, the beam steering elements 38 may be correspond to liquid crystals on silicon (LcoS) elements wherein phase gratings are used to modify the reflection angle of the incident signal by changing the periodic space between the different elements of the phase grating. The signals of the different wavelength channels are therefore reflected by the beam steering elements 38 and sent back toward the fibers f₁...f_{N} of the fiber array 30 via a return path which is the same as the forward path, the exit fiber of a signal being different than the entrance fiber.

More advanced WSS may enable N*N switching, for example by using different beam steering elements 38 producing different orientations of the reflected part of the signal for signals corresponding to a single wavelength channel.

Thus, the structure of the WSS, which are generally used as 1*N multiplexer (one main input, N outputs) or N*1 demultiplexer (N inputs, one main output) may also enable switching some of the wavelength channels of a signal received on a first input/output port toward a second input/output port, the first input/output port being different from the main input and/or the second input/output port being different from the main output by choosing a predetermined angle for the beam steering elements.

In the case of fig.3, the amplified spontaneous emission signals received from the first amplifier 18 on some channels corresponding to the idle channels of the transmission fiber 14 are transmitted toward the second amplifier 20.

The second WSS 22 comprises a main output 223 coupled to the transmission fiber 14 and a plurality of main inputs 221 coupled to a respective plurality of transmitting units 24. A transmitting unit 24 comprises for example a tunable laser source or a plurality of laser sources.

A first input/output port 225 of the second WSS 22 is coupled to the output of the second amplifier 20 and receives therefore amplified spontaneous emission signals corresponding to the idle channels of the transmission fiber 14. The first input/output port 225 is different from the main output 223 and different from the main inputs 221.

The second WSS 22 is configured for multiplexing the signals received from the different transmitting units 24 and from the first input/output port 225 and for transmitting the multiplexed signal toward the transmission fiber via its main output 223.

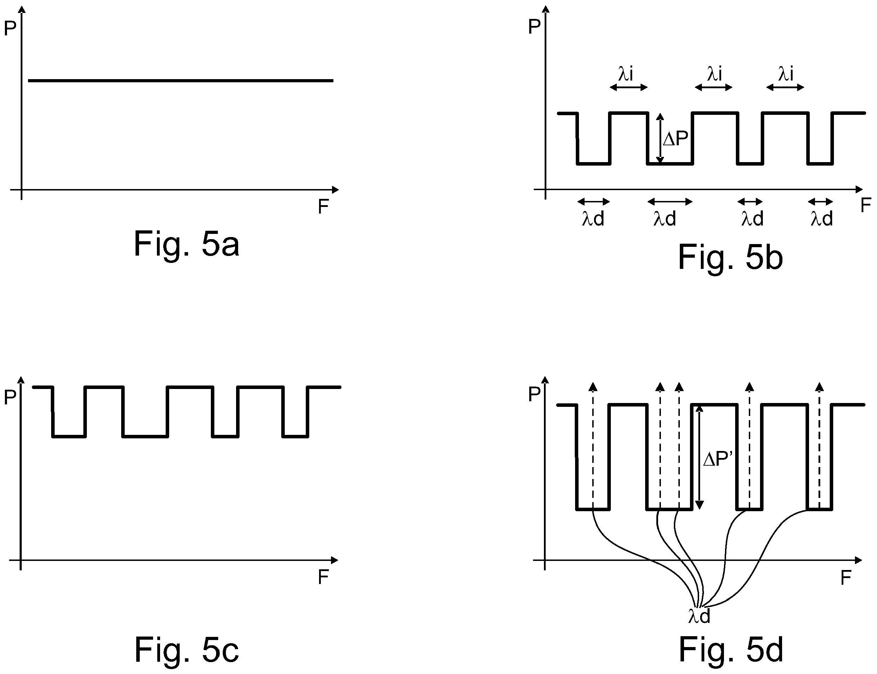

Figs.5a to 5d represent the optical power P as a function of the optical frequency F of the transmitted signal at different locations in the optical multiplexing device 10.

Fig.5a is a flat signal having a given optical power over the frequency range, for example the C band, corresponding to the amplified spontaneous emission signal at the output of the first amplifier 18.

Fig.5b is a signal with a low optical power level for some wavelength channels noted λ_{d} corresponding to the data channels used in the transmission fiber 14 and a high optical power level for the other wavelength channels noted λᵢ corresponding to the idle channels. Fig.5b corresponds to the signal transmitted by the first WSS 12 toward the second amplifier 20. Indeed, the first WSS 12 is configured to transmit only the part of the amplified spontaneous emission signal received from the first amplifier and represented in Fig.5a corresponding to the idle wavelength, the other wavelength channels being filtered out by the first WSS 12. The difference ΔP of optical power between the low optical power level and the high optical power level corresponds to the optical isolation of the first WSS 12.

Fig.5c corresponds to the signal of Fig.5b wherein the optical power has been increased over the entire waveband and corresponds to the signal at the output of the second amplifier 20. Indeed, the second amplifier 20 is configured to amplify the received signal with a flat gain over the entire waveband.

Fig.5d represents the multiplexed signal at the output of the second WSS 22 comprising the data channels λ_{d} and the idle channels λᵢ filed with the spontaneous emission signals. In Fig.5d, the optical isolation ΔP' becomes much higher with respect to the optical isolation ΔP in Fig.5b obtained at the output of the first WSS 12. Thus, the transmission of the spontaneous emission signal through a first WSS 12, a second amplifier 20 and a second WSS 22 enables to increase the optical isolation between the different wavelength channels and in particular between the data channels and the idle channels filed with spontaneous emission signals so that the obtained optical signal to noise ratio is improved and becomes compatible with long-haul transmissions.

Furthermore, it has to be noted that with the configuration of fig.3, as the first amplifier 18 is linked to a input/output port 125 of a first WSS 12 which is used as a demultiplexer for the data channels, the signal transmitted by the first amplifier 18 is transmitted in opposite direction with respect to the data signals transmitted by the first WSS 12 so that the spontaneous emission signals transmitted by the first amplifier 18 may have a higher power (than in the case wherein the spontaneous emission signals are transmitted in the same direction as the data signals) without degrading the optical signal to noise ratio of the data signals.

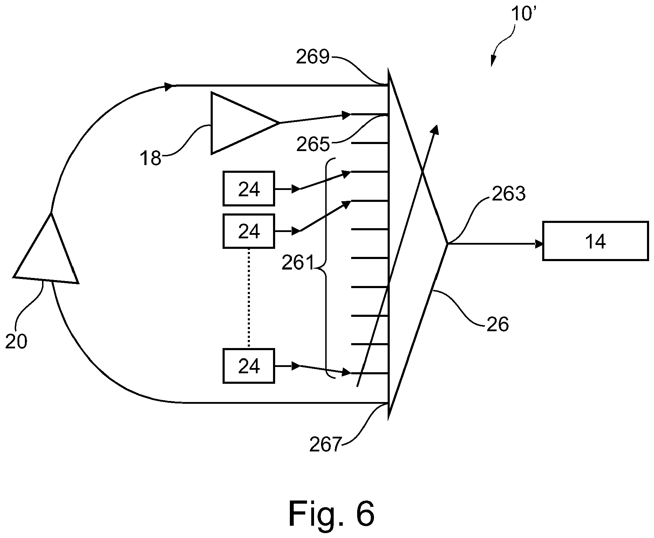

Fig.6 represents a second embodiment of an optical multiplexing device 10' comprising a wavelength selective switch 26 hereafter called WSS 26, a first amplifier 18 and a second amplifier 20 wherein the processing of the spontaneous emission signal from the first amplifier 18 to the transmission fiber 14 is achieved using a single WSS 26.

The WSS 26 is configured as a multiplexer for multiplexing the wavelength channels to be transmitted toward the transmission fiber 14. The WSS 26 comprises a plurality of main inputs 261 coupled to a respective plurality of transmitting units 24 (similar to the transmitting units 24 of the first embodiment) and a main output 263 coupled to the transmission fiber 14.

The output of the first optical amplifier 18 is coupled to a first input/output port 265 of the WSS 26 which is different from the main inputs 261 and different from the main output 263. A second input/output port 267 of the WSS 26, which is different from the main inputs 261, different from the main output 263 and different from the first input/output port 265, is coupled to the input of the second amplifier 20 and the output of the second amplifier 20 is coupled to a third input/output port 269 of the WSS 26, which is different from the main inputs 261, different from the main output 263, different from the first input/output port 265 and different from the second input/output port 267.

As for the first embodiment, the first optical amplifier 18 is configured for emitting amplified spontaneous emission signals on a waveband corresponding to the waveband of the different wavelength channels used in the transmission fiber 14, for example a waveband corresponding to the C band and lying between 1530 to 1565 nm.

The WSS 26 is configured for switching the part of the amplified spontaneous emission signal received on its first input/output port 265 and corresponding to the idle wavelength channels of the signal transmitted toward the transmission fiber 14 on its second input/output port 267 toward the second amplifier 20. The WSS 26 is also configured for multiplexing the signal received from the second amplifier 20 on its third input/output port 269 with the data signals received from the transmitting units 24 on its main inputs 261 and for transmitting the multiplexed signal on its main output 263 toward the transmission fiber 14. Fig.5a represents the signal transmitted at the output of the first amplifier 18, fig.5b, the signal transmitted at the input of the second amplifier 20, fig.5c, the signal transmitted at the output of the second amplifier and fig.5d, the signal transmitted at the main output 263 of the WSS 26.

Furthermore, it has to be noted that to obtain the configuration of the WSS 26 described previously with a basic WSS (N*1) as described in fig.4, the fibers corresponding to the first input/output port 265, the second input/output port 267, the third input/output port 269 and the main output 263 have to be arranged in the fiber array 30 so that the reflection angle for transmitting a signal from a fiber corresponding to the first input/output port 265 to a fiber corresponding to the second input/output port 267 is the same as the reflection angle for transmitting a signal from a fiber corresponding to the third input/output port 269 to a fiber corresponding to the main output 263. Indeed, as the wavelength channels transmitted from the first input/output port 265 to the second input/output port 267 are the same as the wavelength channels transmitted from the third input/output port 269 to the main output 263 and that each wavelength channel is reflected by a single micro-mirror of a beam steering element 44, the orientation of the micro-mirrors of the beam steering element 44 has to be suitable for both reflections. For more advanced WSS enabling for example N*2 or N*N configurations, the input of the second amplifier 20 can be coupled to one of the outputs of the WSS 26.

This second embodiment appears to an alternate embodiment to the first embodiment when the number of WSS has to be limited.

Furthermore, in both embodiments, the gain of the amplifiers is tuned to obtain an optical signal to noise ratio (OSNR) higher than 35dB/0.1nm on the data signals at the output ports 223, 263. Such a result depends on the performance of the WSS and in particular its optical isolation but considering a basic WSS having an optical isolation smaller than -20dB, a solution to reach the desired OSNR is to limit the amplification of the first amplifier 18. The gain of the first amplifier 18 is for example limited to 5 dBm, or preferably 0dBm. The gain of the second amplifier may be higher, for example higher than 0 dBm.

Besides, the capacity of a WSS is in general too low for enabling the multiplexing or the demultiplexing of all the wavelength channels of the multiplexed signal transmitted through a transmission fiber 14. In such case, several optical multiplexing devices 10 as described previously may be used to process all the wavelength channels.

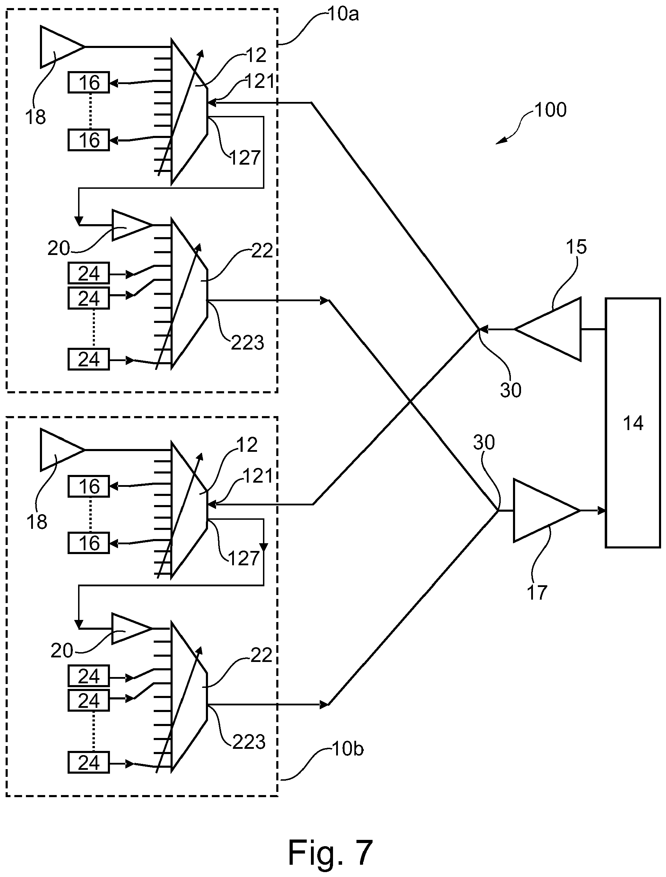

Fig.7 represents a first embodiment of an optical multiplexing equipment 100 comprising two optical multiplexing devices 10 as disclosed in fig.3 and named 10a et 10b. The multiplexed signal received from the transmission fiber 14 is amplified via an amplifier 15 and then transmitted via an optical coupler 30 toward both optical multiplexing devices 10. The first WSS 12 of the first optical multiplexing device 10a is configured for transmitting a first group of wavelength channels, for example a first half of the wavelength channels toward the receiving units 16 of the first optical multiplexing device 10a while the first WSS 12 of the second optical multiplexing device 10b is configured for transmitting a second group of wavelength channels, for example a second half of the wavelength channels toward the receiving units 16 of the second optical multiplexing device 10b.

It has to be noted that the first WSS 12 is represented as N*2 WSS in fig.7 but other configurations such as a N*1 WSS as disclosed in fig.3 may also be used.

Furthermore, the first WSS 12 of the first optical multiplexing device 10a is configured for transmitting the amplified spontaneous emission signal received from the first amplifier 18 of the first optical multiplexing device 10a and corresponding to idle wavelength channels of the first group of wavelength channels toward the second amplifier 20 of the first optical multiplexing device 10a while the first WSS 12 of the second optical multiplexing device 10b is configured for transmitting the amplified spontaneous emission signal received from the first amplifier 18 of the second optical multiplexing device 10b and corresponding to idle wavelength channels of the second group of wavelength channels toward the second amplifier 20 of the second optical multiplexing device 10b.

The second WSS 22 of the first optical multiplexing device 10a is configured for receiving and multiplexing signals received from transmission units 24 of the first optical multiplexing device 10a and corresponding to the first group of wavelength channels as well as a signal received from the second amplifier 20 of the first optical multiplexing device 10a comprising idle wavelength channels of the first group. The signal multiplexed by the second WSS 22 of the first optical multiplexing device 10a is then transmitted to the transmission fiber 14 via an optical coupler 30 and an amplifier 17.

In the same way, the second WSS 22 of the second optical multiplexing device 10b is configured for receiving and multiplexing signals received from transmission units 24 of the second optical multiplexing device 10b and corresponding to the second group of wavelength channels as well as a signal received from the second amplifier 20 of the second optical multiplexing device 10b comprising idle wavelength channels of the second group. The signal multiplexed by the second WSS 22 of the second optical multiplexing device 10b is then transmitted to the transmission fiber 14 via the optical coupler and the amplifier. The signals coming from the first and the second optical multiplexing devices 10a and 10b are therefore multiplexed at the optical coupler. The sets of idle wavelength channels of the first group and of the second group may not be disjoint. Indeed, the wavelength channels filled with the amplified spontaneous emission signals may be the same for the first optical multiplexing device 10a and the second optical multiplexing device 10b. In such case, half of the power of the amplified spontaneous emission signals of the multiplexed signal is transmitted by each optical multiplexing device 10a and 10b. With such configuration, in case of a failure of an optical amplifier of one of the optical multiplexing device 10a or 10b, the idle wavelength channels can be filled with the optical amplifiers of the other optical multiplexing device by adapting the power of the optical amplifiers of the said other optical multiplexing device.

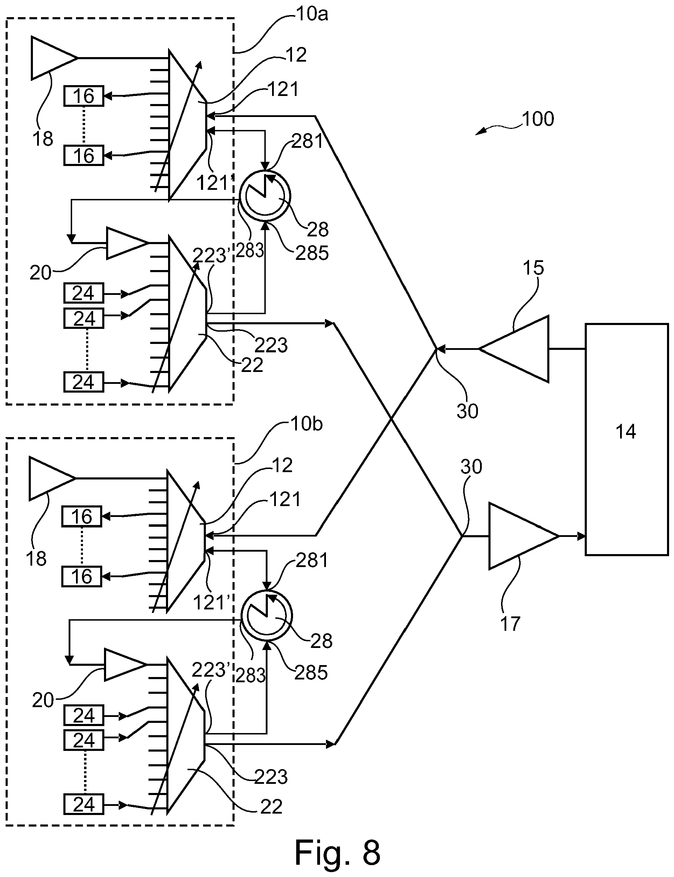

Fig.8 represents a second embodiment of an optical multiplexing equipment 100 comprising two optical multiplexing devices 10 as disclosed in fig.3 and named 10a et 10b. This embodiment is pretty similar to the first embodiment and only the differences will now be described. The goal of this second embodiment is to enable the optical multiplexing equipment 10 to check if the transmitting units 24 and the receiving units 16 work normally. It consists mainly of using an optical circulator 28 to transmit the signals coming from one or several transmitting units 24 directly toward a receiving unit 16. For this embodiment, the first WSSs 12 require two main inputs 121 and 121' and the second WSSs 22 require two main outputs 223 and 223'. The second WSSs 22 are configured for transmitting one or several signals received from the transmitting units 16 toward the second main input 121' of the first WSS 12 via the optical circulator 28. The first WSSs 12 are then configured for transmitting the signals received from the optical circulator 28 toward associated receiving units 16. This transmission from the transmitting units 24 directly (without transiting through the transmission fiber 14) to the receiving units 16 enables checking that the transmitting units 24 and the receiving units 16 work properly. The second main input 121' of the first WSS 12 is also used to replace the input/output port 127. The amplified spontaneous emission signal is therefore transmitted by the first WSS toward the optical circulator 28 via the main input 121'. the optical circulator is also configured for transmitting the signals received from the first WSS 12 toward the second amplifier 20.
Thus, this second embodiment is equivalent to the first embodiment presented in fig.7 with the additional feature of the capability to transmit signals directly (internally to the optical multiplexing equipment 100) from the transmitting units 24 to the receiving units 16 of the optical multiplexing equipment 100 in order to check the correct functioning of the transmitting units 24 and of the receiving units 16.

The present invention also refers also to a method for transmitting an optical multiplexed signal comprising a plurality of wavelength division multiplexing channels lying in a given waveband, the C band in the present case, to an optical transmission line 14. The method comprises the emission of an amplified spontaneous emission signal on the given waveband, in the present example by a first amplifier 18. The amplification is for example lower than 5 dBm, preferably lower than 0 dBm. This amplified spontaneous emission signal is then transmitted through a first WSS where it is filtered so that only channels corresponding to the idle wavelength division multiplexing channels of the multiplexed signal that needs to be transmitted to a transmission fiber 14 are transmitted. The filtered signal is then amplified, for example with a second amplifier 20, for example at an optical power higher than 0 dBm, and transmitted to a second WSS to be multiplexed with data channels to form a multiplexed signal. The second WSS can be the same as the first WSS or can be another WSS. The multiplexed signal is then transmitted toward a transmission line or transmission fiber 14.

The present invention enables therefore improving the optical signal to noise ratio thanks to the high optical isolation obtained between the idle channels and the data channels by the double transmission through a wavelength selective switch. Furthermore, the present invention does not require additional equipment as the wavelength selective switches are already used for multiplexing or demultiplexing the data channels. The feeding of the idle wavelength channels by amplified spontaneous emission signals by wavelength selective switches also enables changing the number of transmitted data channels on a transmission line along time and improves therefore the flexibility of such a transmission line and notably long-haul transmission line such as submarine transmission line.

## Claims

1. Optical multiplexing device (10, 10', 10a, 10b) destined to be coupled to an optical transmission line (14) for transmitting a multiplexed signal comprising a plurality of multiplexed wavelength channels within a given waveband, the said optical multiplexing device comprising:
- a first wavelength selective switch "WSS" (12, 26) comprising a plurality of input/output ports (121, 123, 125, 127, 261, 263, 265, 267),
- a first optical amplifier (18) having an output configured to be coupled to an input/output port (125, 265) of the first wavelength selective switch (12) and configured for emitting amplified spontaneous emission signals on the given waveband,
the first wavelength selective switch (12) being configured for transmitting the amplified spontaneous emission signals on the idle wavelength channels of the multiplexed signal,
wherein the optical multiplexing device also comprises:
- a second wavelength selective switch (22, 26),
- a second optical amplifier (20) having:
- an input configured to be coupled to an input/output port (127, 267) of the first wavelength selective switch (12, 26) and
- an output configured to be coupled to an input/output port (225, 269) of the second wavelength selective switch (22, 26),
the first wavelength selective switch (12, 26) being configured for transmitting the spontaneous emission signals received from the first optical amplifier (18) toward the second optical amplifier (20) and the second wavelength selective switch (22, 26) being configured for transmitting the amplified spontaneous emission signals received from the second optical amplifier (20) toward the optical transmission line (14).

2. Optical multiplexing device (10, 10', 10a, 10b) in accordance with claim 1 wherein the emission spontaneous signal transmitted from the first wavelength selective switch (12, 26) toward the second optical amplifier (22, 26) corresponds to a filtered part of the emission spontaneous signal received from the first optical amplifier (18) comprising only the wavelength channels corresponding to the idle wavelength channels of the multiplexed signal.

3. Optical multiplexing device (10, 10', 10a, 10b) in accordance with claim 1 or 2 wherein the second wavelength selective switch (22, 26) is configured for receiving a plurality of data signals and for multiplexing the data signals and the amplified spontaneous emission signals received from the second optical amplifier (20) into a multiplexed signal destined to be transmitted to the optical transmission line (14).

4. Optical multiplexing device (10, 10a, 10b) in accordance with one of the claims 1 to 3 wherein the first wavelength selective switch (12) is configured as a demultiplexer comprising an input/output port (121) configured to be coupled to the transmission line (14) for receiving a multiplexed signal and a plurality of input/output ports (123) configured to be coupled to a respective plurality of receiving units (16) configured for receiving the signals demultiplexed by the first wavelength selective switch (12),
and wherein the second wavelength selective (22) switch is configured as a multiplexer comprising a plurality of input/output ports (221) configured to be coupled to a respective plurality of transmitting units (24) configured for emitting data signals and an input/output port (223) configured to be coupled to the transmission line (14) for transmitting a multiplexed signal.

5. Optical multiplexing device (10, 10a, 10b) in accordance with claim 4 wherein the receiving units (16) comprise coherent receivers.

6. Optical multiplexing device (10') in accordance with one of the claims 1 to 3 wherein the first and the second wavelength selective switches (26) refer to the same wavelength selective switch (26), the said wavelength selective switch (26) being configured as a multiplexer comprising a plurality of input/output ports (261) configured to be coupled to a respective plurality of transmitting units (24) configured for emitting data signals and an input/output port (263) configured to be coupled to the transmission line (14) for transmitting a multiplexed signal.

7. Optical multiplexing device (10') in accordance with claim 6 wherein the first optical amplifier (18) has its output coupled to a first input/output port (265) of the wavelength selective switch (26) and the second optical amplifier (20) has its input coupled to a second input/output port (267) of the wavelength selective switch (26) and its output coupled to a third input/output port (269) of the wavelength selective switch (26) and wherein the wavelength selective switch (26) is configured for transmitting the signal received on the first input/output port (265) toward the second input/output port (267) and for multiplexing the signal received on the third input/output port (269) with the data signals received from the plurality of transmitting units (24).

8. Optical multiplexing device (10, 10', 10a, 10b) in accordance with one of the previous claims wherein the wavelength selective switches (12, 22, 26) are liquid crystal on silicon "LCoS" based wavelength selective switches.

9. Optical multiplexing device (10, 10', 10a, 10b) in accordance with one of the previous claims wherein the optical amplifiers (18, 20) are erbium doped fiber amplifier "EDFA" optical amplifiers.

10. Optical multiplexing device (10, 10', 10a, 10b) in accordance with one of the previous claims wherein the optical multiplexing device is configured to be coupled to a submarine transmission line (14).

11. Optical multiplexing equipment (100) comprising:
- a first optical multiplexing device (10, 10a) in accordance with claim 4 configured for transmitting a first multiplexed signal on a first waveband,
- a second optical multiplexing device (10, 10b) in accordance with claim 4 configured for transmitting a second multiplexed signal on a second waveband different from the first waveband,
- a first optical coupler (30) comprising an input configured to be coupled to the transmission line (14) to receive a multiplexed signal, a first output configured to be coupled to an input/output port (121) of the first wavelength selective switch (12) of the first optical multiplexing device (10a) for transmitting a multiplexed signal and a second output configured to be coupled to an input/output port (121) of the first wavelength selective switch (12) of the second optical multiplexing device (10b) for transmitting the multiplexed signal,
- a second optical coupler (30) comprising an output configured to be coupled to the transmission line (14) to transmit a multiplexed signal, a first input configured to be coupled to an input/output port (223) of the second wavelength selective switch (22) of the first optical multiplexing device (10a) for receiving the first multiplexed signal and a second input configured to be coupled to an input/output port (223) of the second wavelength selective switch (22) of the second optical multiplexing device (10b) for transmitting the second multiplexed signal, the second optical coupler (30) being configured for multiplexing the first and the second multiplexed signals and for transmitting the multiplexed signal comprising the first and the second multiplexed signals toward the transmission line (14).

12. Optical multiplexing equipment (100) in accordance with claim 11 wherein the first waveband and the second waveband are partially overlapping so that the idle wavelength channels of the first optical multiplexing device (10, 10a) correspond to the idle wavelength channels of the second optical multiplexing device (10, 10b).

13. Optical multiplexing equipment (100) in accordance with claim 11 or 12 also comprising:
- a first optical circulator (28) comprising:
- a first input/output port (281) configured to be coupled to an input/output port (121') of the first wavelength selective switch (12) of the first optical multiplexing device (10a),
- a second input/output port (283) configured to be coupled to the input port (225) of the second optical amplifier (22) of the first optical multiplexing device (10a),
- a third input/output port (285) configured to be coupled to an input/output port (223') of the second wavelength selective switch (22) of the first optical multiplexing device,
the first optical circulator (28) being configured for receiving the amplified spontaneous emission signals from the first wavelength selective switch (12) of the first optical multiplexing device (10a) on its first input/output port (281), for transmitting the received amplified spontaneous emission signals to the second optical amplifier (20) of the first optical multiplexing device (10a) via its second input/output port (283), for receiving a test signal sent from at least one transmitting unit (24) of the first optical multiplexing device (10a) through the second wavelength selective switch (22) of the first optical multiplexing device (10a) on its third input/output port (285) and for transmitting the test signal to the first wavelength selective switch (12) of the first optical multiplexing device (10a) via its first input/output port (281),
- a second optical circulator (28) comprising:
- a first input/output port (281) configured to be coupled to an input/output port (121') of the first wavelength selective switch (12) of the second optical multiplexing device (10b),
- a second input/output port (283) configured to be coupled to the input port of the second optical amplifier (20) of the second optical multiplexing device (10b),
- a third input/output port (285) configured to be coupled to an input/output port (223') of the second wavelength selective switch (22) of the second optical multiplexing device (10b),
the second optical circulator (28) being configured for receiving the amplified spontaneous emission signals from the first wavelength selective switch (12) of the second optical multiplexing device (10b) on its first input/output port (281), for transmitting the received amplified spontaneous emission signals to the second optical amplifier (20) of the second optical multiplexing device (10b) via its second input/output port (283), for receiving a test signal sent from at least one transmitting unit (24) of the second optical multiplexing device (10b) through the second wavelength selective switch (22) of the second optical multiplexing device (10b) on its third input/output port (285) and for transmitting the test signal to the first wavelength selective switch (12) of the second optical multiplexing device (10b) via its first input/output port (281).

14. Method for transmitting an optical multiplexed signal comprising a plurality of wavelength division multiplexing channels lying in a given waveband to an optical transmission line wherein the method comprises the following steps:
- emitting an amplified spontaneous emission signal on the given waveband,
- filling idle wavelength division multiplexing channels of the multiplexed signal with the amplified spontaneous emission signal using a wavelength selective switch (12, 26),
- amplifying the wavelength division multiplexing channels filled with the amplified spontaneous emission signals,
- multiplexing the amplified wavelength division multiplexing channels filled with the amplified spontaneous emission signals and the data channels to form a multiplexed signal using a wavelength selective switch (22, 26),
- transmitting the multiplexed signal toward a transmission line (14).

15. Method in accordance with claim 14 wherein the emission step is achieved at an optical power lower than 5 dBm and wherein the amplification step is achieved at an optical power higher than 0 dBm.

## Patentansprüche

1. Optische Multiplexer-Vorrichtung (10, 10', 10a, 10b), die dazu bestimmt ist, mit einer optischen Übertragungsleitung (14) zum Senden eines gemultiplexten Signals verbunden zu sein, das mehrere gemultiplexte Wellenlängenkanäle innerhalb eines gegebenen Wellenbands umfasst, wobei die optische Multiplexer-Vorrichtung umfasst:
- einen ersten wellenlängenselektiven Schalter "WSS" (12, 26), der mehrere Eingangs-/Ausgangsports (121, 123, 125, 127, 261, 263, 265, 267) umfasst,
- einen ersten optischen Verstärker (18) mit einem Ausgang, der konfiguriert ist, mit einem Eingangs-/Ausgangsport (125, 265) des ersten wellenlängenselektiven Schalters (12) verbunden zu sein, und der zum Emittieren von verstärkten Spontanemissionssignalen auf dem gegebenen Wellenband konfiguriert ist,
wobei der erste wellenlängenselektive Schalter (12) zum Senden der verstärkten Spontanemissionssignale auf den freien Wellenlängenkanälen des gemultiplexten Signals konfiguriert ist,
wobei die optische Multiplexer-Vorrichtung ferner umfasst:
- einen zweiten wellenlängenselektiven Schalter (22, 26),
- einen zweiten optischen Verstärker (20) mit:
- einem Eingang, der konfiguriert ist, mit einem Eingangs-/Ausgangsport (127, 267) des ersten wellenlängenselektiven Schalters (12, 26) verbunden zu sein, und
- einem Ausgang, der konfiguriert ist, mit einem Eingangs-/Ausgangsport (225, 269) des zweiten wellenlängenselektiven Schalters (22, 26) verbunden zu sein,
wobei der erste wellenlängenselektive Schalter (12, 26) zum Senden der Spontanemissionssignale, die von dem ersten optischen Verstärker (18) empfangen werden, in Richtung des zweiten optischen Verstärkers (20) konfiguriert ist, und der zweite wellenlängenselektive Schalter (22, 26) zum Senden der verstärkten Spontanemissionssignale, die von dem zweiten optischen Verstärker (20) empfangen werden, in Richtung der optischen Übertragungsleitung (14) konfiguriert ist.

2. Optische Multiplexer-Vorrichtung (10, 10', 10a, 10b) nach Anspruch 1, wobei das Spontanemissionssignal, das von dem ersten wellenlängenselektiven Schalter (12, 26) in Richtung des zweiten optischen Verstärkers (22, 26) gesendet wird, einem gefilterten Teil des von dem ersten optischen Verstärker (18) empfangenen Spontanemissionssignals entspricht, der nur die Wellenlängenkanäle umfasst, die den freien Wellenlängenkanälen des gemultiplextes Signals entsprechen.

3. Optische Multiplexer-Vorrichtung (10, 10', 10a, 10b) nach Anspruch 1 oder 2, wobei der zweite wellenlängenselektive Schalter (22, 26) konfiguriert ist zum Empfangen von mehreren Datensignalen und zum Multiplexen der Datensignale und der verstärkten Spontanemissionssignale, die von dem zweiten optischen Verstärker (20) empfangen werden, in ein gemultiplextes Signal, das zur Übertragung an die optische Übertragungsleitung (14) bestimmt ist.

4. Optische Multiplexer-Vorrichtung (10, 10a, 10b) nach einem der Ansprüche 1 bis 3, wobei der erste wellenlängenselektive Schalter (12) als ein Demultiplexer konfiguriert ist umfassend einen Eingangs-/Ausgangsport (121), der konfiguriert ist, mit der Übertragungsleitung (14) zum Empfangen eines gemultiplexten Signals verbunden zu sein, und mehrere Eingangs-/Ausgangsports (123), die konfiguriert sind, mit jeweiligen mehreren Empfangseinheiten (16) verbunden zu sein, die zum Empfangen der durch den ersten wellenlängenselektiven Schalter (12) demultiplexten Signale konfiguriert sind,
und wobei der zweite wellenlängenselektive Schalter (22) als ein Multiplexer konfiguriert ist umfassend mehrere Eingangs-/Ausgangsports (221), die konfiguriert sind, mit jeweiligen mehreren Sendeeinheiten (24) verbunden zu sein, die zum Emittieren von Datensignalen konfiguriert sind, und einen Eingangs-/Ausgangsport (223), der konfiguriert ist, mit der Übertragungsleitung (14) zum Senden eines gemultiplexten Signals verbunden zu sein.

5. Optische Multiplexer-Vorrichtung (10, 10a, 10b) nach Anspruch 4, wobei die Empfangseinheiten (16) kohärente Empfänger umfassen.

6. Optische Multiplexer-Vorrichtung (10') nach einem der Ansprüche 1 bis 3, wobei der erste und der zweite wellenlängenselektive Schalter (26) sich auf denselben wellenlängenselektiven Schalter (26) beziehen, der wellenlängenselektive Schalter (26) als Multiplexer konfiguriert ist umfassend mehrere Eingangs-/Ausgangsports (261), die konfiguriert sind, mit jeweiligen mehreren Sendeeinheiten (24) verbunden zu sein, die zum Emittieren von Datensignalen konfiguriert sind, und einen Eingangs-/Ausgangsport (263), der konfiguriert ist, mit der Übertragungsleitung (14) zum Senden eines gemultiplexten Signals verbunden zu sein.

7. Optische Multiplexer-Vorrichtung (10') nach Anspruch 6, wobei der erste optische Verstärker (18) seinen Ausgang mit einem ersten Eingangs-/Ausgangsport (265) des wellenlängenselektiven Schalters (26) verbunden hat und der zweite optische Verstärker (20) seinen Eingang mit einem zweiten Eingangs-/Ausgangsport (267) des wellenlängenselektiven Schalters (26) verbunden hat und seinen Ausgang mit einem dritten Eingangs-/Ausgangsport (269) des wellenlängenselektiven Schalters (26) verbunden hat und wobei der wellenlängenselektive Schalter (26) konfiguriert ist zum Senden des an dem ersten Eingangs-/Ausgangsport (265) empfangenen Signals in Richtung des zweiten Eingangs-/Ausgangsports (267) und zum Multiplexen des an dem dritten Eingangs-/Ausgangsport (269) empfangenen Signals mit den von den mehreren Sendeeinheiten (24) empfangen Datensignalen.

8. Optische Multiplexer-Vorrichtung (10, 10', 10a, 10b) nach einem der vorhergehenden Ansprüche, wobei die wellenlängenselektiven Schalter (12, 22, 26) wellenlängenselektive Schalter auf Flüssigkristall-auf-Silizium-("LCoS") Basis sind.

9. Optische Multiplexer-Vorrichtung (10, 10', 10a, 10b) nach einem der vorhergehenden Ansprüche, wobei die optischen Verstärker (18, 20) optische Verstärker mit Erbium-dotiertem Faserverstärker "EDFA" sind.

10. Optische Multiplexer-Vorrichtung (10, 10', 10a, 10b) nach einem der vorhergehenden Ansprüche, wobei die optische Multiplexer-Vorrichtung konfiguriert ist, mit einer Unterwasser-Übertragungsleitung (14) verbunden zu sein.

11. Optische Multiplexausrüstung (100), umfassend:
- eine erste optische Multiplexer-Vorrichtung (10, 10a) gemäß Anspruch 4, die zum Senden eines ersten gemultiplexten Signals auf einem ersten Wellenband konfiguriert ist,
- eine zweite optische Multiplexer-Vorrichtung (10, 10b) gemäß Anspruch 4, die zum Senden eines zweiten gemultiplexten Signals auf einem zweiten Wellenband, das sich von dem ersten Wellenband unterscheidet, konfiguriert ist,
- einen ersten optischen Koppler (30), umfassend einen Eingang, der konfiguriert ist, mit der Übertragungsleitung (14) verbunden zu sein, um ein gemultiplextes Signal zu empfangen, einen ersten Ausgang, der konfiguriert ist, mit einem Eingangs-/Ausgangsport (121) des ersten wellenlängenselektiven Schalters (12) der ersten optischen Multiplexer-Vorrichtung (10a) verbunden zu sein zum Senden eines gemultiplexten Signals, und einen zweiten Ausgang, der konfiguriert ist, mit einem Eingangs-/Ausgangsport (121) des ersten wellenlängenselektiven Schalters (12) der zweiten optischen Multiplexer-Vorrichtung (10b) verbunden zu sein zum Senden des gemultiplexten Signals,
- einen zweiten optischen Koppler (30), umfassend einen Ausgang, der konfiguriert ist, mit der Übertragungsleitung (14) verbunden zu sein, um ein gemultiplextes Signal zu senden, und einen ersten Eingang, der konfiguriert ist, mit einem Eingangs-/Ausgangsport (223) des zweiten wellenlängenselektiven Schalters (22) der ersten optischen Multiplexer-Vorrichtung (10a) verbunden zu sein zum Empfangen des ersten gemultiplexten Signals, und einen zweiten Eingang, der konfiguriert ist, mit einem Eingangs-/Ausgangsport (223) des zweiten wellenlängenselektiven Schalters (22) der zweiten optischen Multiplexer-Vorrichtung (10b) verbunden zu sein zum Senden des zweiten gemultiplexten Signals, wobei der zweite optische Koppler (30) konfiguriert ist zum Multiplexen des ersten und des zweiten gemultiplextes Signals und zum Senden des gemultiplexten Signals, das das erste und das zweite gemultiplextes Signal umfasst, in Richtung zur Übertragungsleitung (14).

12. Optische Multiplexausrüstung (100) nach Anspruch 11, wobei das erste Wellenband und das zweite Wellenband teilweise überlappen, so dass die freien Wellenlängenkanäle der ersten optischen Multiplexer-Vorrichtung (10, 10a) den freien Wellenlängenkanälen der zweiten optischen Multiplexer-Vorrichtung (10, 10b) entsprechen.

13. Optische Multiplexer-Vorrichtung (100) nach Anspruch 11 oder 12, ferner umfassend:
- einen ersten optischen Zirkulator (28), umfassend:
- einen ersten Eingangs-/Ausgangsport (281), der konfiguriert ist, mit einem Eingangs-/Ausgangsport (121') des ersten wellenlängenselektiven Schalters (12) der ersten optischen Multiplexer-Vorrichtung (10a) verbunden zu sein,
- einen zweiten Eingangs-/Ausgangsport (283), der konfiguriert ist, mit dem Eingangsport (225) des zweiten optischen Verstärkers (22) der ersten optischen Multiplexer-Vorrichtung (10a) verbunden zu sein,
- einen dritten Eingangs-/Ausgangsport (285), der konfiguriert ist, mit einem Eingangs-/Ausgangsport (223') des zweiten wellenlängenselektiven Schalters (22) der ersten optischen Multiplexer-Vorrichtung verbunden zu sein,
wobei der erste optische Zirkulator (28) konfiguriert ist zum Empfangen der verstärkten Spontanemissionssignale von dem ersten wellenlängenselektiven Schalter (12) der ersten optischen Multiplexer-Vorrichtung (10a) an seinem ersten Eingangs-/Ausgangsport (281), zum Senden der empfangenen verstärkten Spontanemissionssignale an den zweiten optischen Verstärker (20) der ersten optischen Multiplexer-Vorrichtung (10a) über seinen zweiten Eingangs-/Ausgangsport (283), zum Empfangen eines von mindestens einer Sendeeinheit (24) der ersten optischen Multiplexer-Vorrichtung (10a) gesendeten Testsignals durch den zweiten wellenlängenselektiven Schalter (22) des ersten optischen Multiplexers (10a) an seinem dritten Eingangs/Ausgangsport (285), und zum Senden des Testsignals an den ersten wellenlängenselektiven Schalter (12) der ersten optischen Multiplexer-Vorrichtung (10a) über seinen ersten Eingangs-/Ausgangsport (281),
- einen zweiten optischen Zirkulator (28), umfassend:
- einen ersten Eingabe/Ausgabe-Anschluss (281), der konfiguriert ist, mit einem Eingang/Ausgangport (121') des ersten wellenlängenselektiven Schalters (12) der zweiten optischen Multiplexer-Vorrichtung (10b) verbunden zu sein,
- einen zweiten Eingangs-/Ausgangsport (283), der konfiguriert ist, mit dem Eingangsport des zweiten optischen Verstärkers (20) der zweiten optischen Multiplexer-Vorrichtung (10b) verbunden zu sein,
- einen dritten Eingangs-/Ausgangsport (285), der konfiguriert ist, mit einem Eingangs-/Ausgangsport (223') des zweiten wellenlängenselektiven Schalters (22) der zweiten optischen Multiplexer-Vorrichtung (10b) verbunden zu sein,
wobei der zweite optische Zirkulator (28) konfiguriert ist zum Empfangen der verstärkten Spontanemissionssignale von dem ersten wellenlängenselektiven Schalter (12) der zweiten optischen Multiplexer-Vorrichtung (10b) an seinem ersten Eingangs-/Ausgangsport (281), zum Senden der empfangenen verstärkten Spontanemissionssignale an den zweiten optischen Verstärker (20) der zweiten optischen Multiplexer-Vorrichtung (10b) über seinen zweiten Eingangs-/Ausgangsport (283), zum Empfangen eines von mindestens einer Sendeeinheit (24) der zweiten optischen Multiplexer-Vorrichtung (10b) gesendeten Testsignals durch den zweiten wellenlängenselektiven Schalter (22) der zweiten optischen Multiplexer-Vorrichtung (10b) an seinem dritten Eingangs-/Ausgangsport (285), und zum Senden des Testsignals an den ersten wellenlängenselektiven Schalter (12) der zweiten optischen Multiplexer-Vorrichtung (10b) über seinen ersten Eingangs-/Ausgangsport (281).

14. Verfahren zum Senden eines optischen gemultiplexten Signals, das mehrere Wellenlängenmultiplexkanäle umfasst, die in einem gegebenen Wellenband liegen, an eine optische Übertragungsleitung, wobei das Verfahren die folgenden Schritte umfasst:
- Emittieren eines verstärkten Spontanemissionssignals auf dem gegebenen Wellenband,
- Auffüllen von freien Wellenlängenmultiplexkanälen des gemultiplextes Signals mit dem verstärkten Spontanemissionssignal unter Verwendung eines wellenlängenselektiven Schalters (12, 26),
- Verstärken der mit den verstärkten Spontanemissionssignalen aufgefüllten Wellenlängenmultiplexkanäle,
- Multiplexen der mit den verstärkten Spontanemissionssignalen aufgefüllten verstärkten Wellenlängenmultiplexkanäle und der Datenkanäle, um ein gemultiplextes Signal zu bilden, unter Verwendung eines wellenlängenselektiven Schalters (22, 26);
- Senden des gemultiplexten Signals an eine Übertragungsleitung (14).

15. Verfahren nach Anspruch 14, wobei der Emissionsschritt bei einer optischen Leistung niedriger als 5 dBm erreicht wird und der Verstärkungsschritt bei einer optischen Leistung höher als 0 dBm erreicht wird.

## Revendications

1. Dispositif de multiplexage optique (10, 10', 10a, 10b) destiné à être couplé à une ligne de transmission optique (14) pour transmettre un signal multiplexé comprenant une pluralité de canaux de longueur d'onde multiplexés dans une bande de longueurs d'onde donnée, ledit dispositif de multiplexage optique comprenant :
- un premier commutateur sélectif en longueur d'onde "WSS" (12, 26) comprenant une pluralité de ports d'entrée/sortie (121, 123, 125, 127, 261, 263, 265, 267),
- un premier amplificateur optique (18) comportant une sortie configurée pour être couplée à un port d'entrée/sortie (125, 265) du premier commutateur sélectif en longueur d'onde (12) et configurée pour émettre des signaux d'émission spontanée amplifiés sur la bande de longueurs d'onde donnée,
le premier commutateur sélectif en longueur d'onde (12) étant configuré pour transmettre les signaux d'émission spontanée amplifiés sur les canaux de longueur d'onde inactifs du signal multiplexé,
dans lequel le dispositif de multiplexage optique comprend également :
- un deuxième commutateur sélectif en longueur d'onde (22, 26),
- un deuxième amplificateur optique (20) comportant :
- une entrée configurée pour être couplée à un port d'entrée/sortie (127, 267) du premier commutateur sélectif en longueur d'onde (12, 26) et
- une sortie configurée pour être couplée à un port d'entrée/sortie (225, 269) du deuxième commutateur sélectif en longueur d'onde (22, 26),
le premier commutateur sélectif en longueur d'onde (12, 26) étant configuré pour transmettre les signaux d'émission spontanée reçus en provenance du premier amplificateur optique (18) vers le deuxième amplificateur optique (20) et le deuxième commutateur sélectif en longueur d'onde (22, 26) étant configuré pour transmettre les signaux d'émission spontanée amplifiés reçus en provenance du deuxième amplificateur optique (20) vers la ligne de transmission optique (14).

2. Dispositif de multiplexage optique (10, 10', 10a, 10b) selon la revendication 1, dans lequel le signal d'émission spontanée transmis par le premier commutateur sélectif en longueur d'onde (12, 26) vers le deuxième amplificateur optique (22, 26) correspond à une partie filtrée du signal d'émission spontanée reçu en provenance du premier amplificateur optique (18) comprenant seulement les canaux de longueur d'onde correspondant aux canaux de longueur d'onde inactifs du signal multiplexé.

3. Dispositif de multiplexage optique (10, 10', 10a, 10b) selon la revendication 1 ou 2, dans lequel le deuxième commutateur sélectif en longueur d'onde (22, 26) est configuré pour recevoir une pluralité de signaux de données et pour multiplexer les signaux de données et les signaux d'émission spontanée amplifiés reçus en provenance du deuxième amplificateur optique (20) en un signal multiplexé destiné à être transmis à la ligne de transmission optique (14).

4. Dispositif de multiplexage optique (10, 10a, 10b) selon l'une des revendications 1 à 3, dans lequel le premier commutateur sélectif en longueur d'onde (12) est configuré en tant que démultiplexeur comprenant un port d'entrée/sortie (121) configuré pour être couplé à la ligne de transmission (14) afin de recevoir un signal multiplexé et plusieurs ports d'entrée/sortie (123) configurés pour être couplés à une pluralité respective d'unités de réception (16) configurées pour recevoir les signaux démultiplexés par le premier commutateur sélectif en longueur d'onde (12),
et dans lequel le deuxième commutateur sélectif en longueur d'onde (22) est configuré en tant que multiplexeur comprenant une pluralité de ports d'entrée/sortie (221) configurés pour être couplés à une pluralité respective d'unités de transmission (24) configurées pour émettre des signaux de données et un port entrée/sortie (223) configuré pour être couplé à la ligne de transmission (14) afin de transmettre un signal multiplexé.

5. Dispositif de multiplexage optique (10, 10a, 10b) selon la revendication 4, dans lequel les unités de réception (16) comprennent des récepteurs cohérents.

6. Dispositif de multiplexage optique (10') selon l'une des revendications 1 à 3, dans lequel les premier et deuxième commutateurs sélectifs en longueur d'onde (26) désignent un même commutateur sélectif en longueur d'onde (26), ledit commutateur sélectif en longueur d'onde (26) étant configuré en tant que multiplexeur comprenant une pluralité de ports d'entrée/sortie (261) configurés pour être couplés à une pluralité respective d'unités de transmission (24) configurées pour émettre des signaux de données et un port d'entrée/sortie (263) configuré pour être couplé à la ligne de transmission (14) afin d'émettre un signal multiplexé.

7. Dispositif de multiplexage optique (10') selon la revendication 6, dans lequel la sortie du premier amplificateur optique (18) est couplée à un premier port d'entrée/sortie (265) du commutateur sélectif en longueur d'onde (26) et l'entrée du deuxième amplificateur optique (20) est couplée à un deuxième port d'entrée/sortie (267) du commutateur sélectif en longueur d'onde (26) et sa sortie est couplée à un troisième port d'entrée/sortie (269) du commutateur sélectif en longueur d'onde (26) et dans lequel le commutateur sélectif en longueur d'onde (26) est configuré pour transmettre le signal reçu sur le premier port d'entrée/sortie (265) vers le deuxième port d'entrée/sortie (267) et pour multiplexer le signal reçu sur le troisième port d'entrée/sortie (269) avec les signaux de données reçus en provenance de la pluralité d'unités de transmission (24).

8. Dispositif de multiplexage optique (10, 10', 10a, 10b) selon l'une des revendications précédentes, dans lequel les commutateurs sélectifs en longueur d'onde (12, 22, 26) sont des commutateurs sélectifs en longueur d'onde à base de cristaux liquides sur silicium "LCoS".

9. Dispositif de multiplexage optique (10, 10', 10a, 10b) selon l'une des revendications précédentes, dans lequel les amplificateurs optiques (18, 20) sont des amplificateurs optiques du type amplificateur à fibre dopée à l'erbium "EDFA".

10. Dispositif de multiplexage optique (10, 10', 10a, 10b) selon l'une des revendications précédentes, dans lequel le dispositif de multiplexage optique est configuré pour être couplé à une ligne de transmission sous-marine (14).

11. Équipement de multiplexage optique (100) comprenant :
- un premier dispositif de multiplexage optique (10, 10a) selon la revendication 4, configuré pour transmettre un premier signal multiplexé sur une première bande de longueurs d'onde,
- un deuxième dispositif de multiplexage optique (10, 10b) selon la revendication 4, configuré pour transmettre un deuxième signal multiplexé sur une deuxième bande de longueurs d'onde différente de la première bande de longueurs d'onde,
- un premier coupleur optique (30) comprenant une entrée configurée pour être couplée à la ligne de transmission (14) afin de recevoir un signal multiplexé, une première sortie configurée pour être couplée à un port d'entrée/sortie (121) du premier commutateur sélectif en longueur d'onde (12) du premier dispositif de multiplexage optique (10a) afin de transmettre un signal multiplexé et une deuxième sortie configurée pour être couplée à un port d'entrée/sortie (121) du premier commutateur sélectif en longueur d'onde (12) du deuxième dispositif de multiplexage optique (10b) afin de transmettre le signal multiplexé,
- un deuxième coupleur optique (30) comprenant une sortie configurée pour être couplée à la ligne de transmission (14) afin de transmettre un signal multiplexé, une première entrée configurée pour être couplée à un port d'entrée/sortie (223) du deuxième commutateur sélectif (22) en longueur d'onde du premier dispositif de multiplexage optique (10a) afin de recevoir le premier signal multiplexé et une deuxième entrée configurée pour être couplée à un port d'entrée/sortie (223) du deuxième commutateur sélectif en longueur d'onde (22) du deuxième dispositif de multiplexage optique (10b) afin de transmettre le deuxième signal multiplexé, le deuxième coupleur optique (30) étant configuré pour multiplexer les premier et deuxième signaux multiplexés et pour transmettre le signal multiplexé comprenant les premier et deuxième signaux multiplexés vers la ligne de transmission (14).

12. Équipement de multiplexage optique (100) selon la revendication 11, dans lequel la première bande de longueurs d'onde et la deuxième bande de longueurs d'onde se chevauchent partiellement de sorte que les canaux de longueur d'onde inactifs du premier dispositif de multiplexage optique (10,10a) correspondent aux canaux de longueur d'onde inactifs du deuxième dispositif de multiplexage optique (10,10b).

13. Équipement de multiplexage optique (100) selon la revendication 11 ou 12, comprenant également :
- un premier circulateur optique (28) comprenant :
- un premier port d'entrée/sortie (281) configuré pour être couplé à un port d'entrée/sortie (121') du premier commutateur sélectif en longueur d'onde (12) du premier dispositif de multiplexage optique (10a),
- un deuxième port d'entrée/sortie (283) configuré pour être couplé au port d'entrée (225) du deuxième amplificateur optique (22) du premier dispositif de multiplexage optique (10a),
- un troisième port d'entrée/sortie (285) configuré pour être couplé à un port d'entrée/sortie (223') du deuxième commutateur sélectif en longueur d'onde (22) du premier dispositif de multiplexage optique,
le premier circulateur optique (28) étant configuré pour recevoir les signaux d'émission spontanée amplifiés en provenance du premier commutateur sélectif en longueur d'onde (12) du premier dispositif de multiplexage optique (10a) sur son premier port d'entrée/sortie (281), pour transmettre les signaux d'émission spontanée amplifiés reçus au deuxième amplificateur optique (20) du premier dispositif de multiplexage optique (10a) via son deuxième port d'entrée/sortie (283), pour recevoir un signal de test envoyé par au moins une unité de transmission (24) du premier dispositif de multiplexage optique (10a) par l'intermédiaire du deuxième commutateur sélectif en longueur d'onde (22) du premier dispositif de multiplexage optique (10a) sur son troisième port d'entrée/sortie (285) et pour transmettre le signal de test au premier commutateur sélectif en longueur d'onde (12) du premier dispositif de multiplexage optique (10a) via son premier port d'entrée/sortie (281),
- un deuxième circulateur optique (28) comprenant :
- un premier port d'entrée/sortie (281) configuré pour être couplé à un port d'entrée/sortie (121') du premier commutateur sélectif en longueur d'onde (12) du deuxième dispositif de multiplexage optique (10b),
- un deuxième port d'entrée/sortie (283) configuré pour être couplé au port d'entrée du deuxième amplificateur optique (20) du deuxième dispositif de multiplexage optique (10b),
- un troisième port d'entrée/sortie (285) configuré pour être couplé à un port d'entrée/sortie (223') du deuxième commutateur sélectif en longueur d'onde (22) du deuxième dispositif de multiplexage optique (10b),
le deuxième circulateur optique (28) étant configuré pour recevoir les signaux d'émission spontanée amplifiés en provenance du premier commutateur sélectif en longueur d'onde (12) du deuxième dispositif de multiplexage optique (10b) sur son premier port d'entrée/sortie (281), pour transmettre les signaux d'émission spontanée amplifiés reçus au deuxième amplificateur optique (20) du deuxième dispositif de multiplexage optique (10b) via son deuxième port d'entrée/sortie (283), pour recevoir un signal de test envoyé par au moins une unité de transmission (24) du deuxième dispositif de multiplexage optique (10b) par l'intermédiaire du deuxième commutateur (22) sélectif en longueur d'onde du deuxième dispositif de multiplexage optique (10b) sur son troisième port d'entrée/sortie (285) et pour transmettre le signal de test au premier commutateur sélectif en longueur d'onde (12) du deuxième dispositif de multiplexage optique (10b) via son premier port d'entrée/sortie (281).

14. Procédé de transmission d'un signal optique multiplexé comprenant une pluralité de canaux de multiplexage par répartition en longueur d'onde situés dans une bande de longueurs d'onde donnée à une ligne de transmission optique, dans lequel le procédé comprend les étapes suivantes :
- l'émission d'un signal d'émission spontanée amplifié sur la bande de longueurs d'onde donnée,
- le remplissage de canaux de multiplexage par répartition en longueur d'onde inactifs du signal multiplexé avec le signal d'émission spontanée amplifié en utilisant un commutateur sélectif en longueur d'onde (12, 26),
- l'amplification des canaux de multiplexage par répartition en longueur d'onde remplis avec les signaux d'émission spontanée amplifiés,
- le multiplexage des canaux de multiplexage par répartition en longueur d'onde amplifiés remplis avec les signaux d'émission spontanée amplifiés et des canaux de données afin de former un signal multiplexé en utilisant un commutateur sélectif en longueur d'onde (22, 26),
- la transmission du signal multiplexé vers une ligne de transmission (14).

15. Procédé selon la revendication 14, dans lequel l'étape d'émission est réalisée à une puissance optique inférieure à 5 dBm et dans lequel l'étape d'amplification est réalisée à une puissance optique supérieure à 0 dBm.
